# EUROPEAN PATENT APPLICATION

(11) **EP 3 366 517 A2**
(43) Date of publication of application: **29.08.2018**
(21) Application number: 18382069.5
(22) Date of filing: 08.02.2018
(51) Int. Cl.: B60Q 1/32, B60Q 1/00, B60Q 3/217, B60Q 3/64

(54) **ILLUMINATION DEVICE FOR A VEHICLE**

(30) Priority: 23.02.2017 ES 201730232
(71) Applicant: Seat, S.A., 08760 Martorell - Barcelona (ES)
(72) Inventor: CAYUELA CALVO, José Luís, 08760 Barcelona (ES); HUPEL, Martin, 08760 Barcelona (DE)
(74) Representative: Elzaburu S.L.P.

(57) **Abstract**

Illumination device for a vehicle, wherein the illumination device comprises a casing (6), a cover (7), that define an interior volume, a light emitter (1), a light transmission means (2), wherein the light transmission means (2) conveys the light emitted by the light emitter (1), a printed circuit board (3), and an electrical conductor (4), wherein the light emitter (1), the light transmission means (2) and the printed circuit board (3) are arranged in the interior volume, the electrical conductor (4) accesses the interior volume via the central zone of the casing (6), supplying electrical energy to the printed circuit board (3), of the end of the light transmission means (2), such that the number of necessary components for the sill strips of the right and left doors is reduced, thereby saving costs.

## Description

### SUBJECT OF THE INVENTION

The present patent application relates to an illumination device for a vehicle according to Claim 1, which incorporates notable innovations and advantages, and a sill strip and a door of a vehicle that comprise said illumination device.

### BACKGROUND OF THE INVENTION

In the automotive sector there is currently a need to render various components for both sides of the vehicle compatible, in particular in the case of certain illumination components, such as, for example, the illuminated sill strips of the doors, on which, in the current solution, there has to be not only a different sill strip cover but also different wiring, there being a first variant that is installed on the right side and a second variant that is installed on the left side of the vehicle, requiring processes, components and/or unique references for each one of the variants.

A device is known in the prior art, as reflected in document EP1816391, that has a housing in which a light conductor and a light emitting means are arranged. The light emitting means includes at least one light emitting diode that is arranged on a flexible printed circuit. The printed circuit is arranged covering the entire housing and comprises a material that allows the passage of the light emitted by the light emitting diode. The printed circuit serves as a cover for the device and is connected to the casing of the device. The light conductor is arranged between the casing and the printed circuit.

Likewise, a unit is known in the prior art, as reflected in document US20090080208, that has decorative elements, preferably in the region of the door, which comprises a layer conducting the light irradiated by a light source, a decorative layer arranged on the layer conducting the light with opaque and translucent regions that are designed to correspond with the decorative elements, and a reflection layer arranged below the layer conducting the light. In order to improve the uniformity of the illumination of the decorative elements and at the same time provides high light efficiency, a translucent dispersal layer is proposed between the layer conducting the light, and the light that covers the decorative element layer, wherein the translucent dispersal layer contains a coarse fraction of particles with a mean particle size in a specific region.

It is observed in both documents, however, that the generation of the illumination is based on a printed circuit board of flexible type, which occupies practically the entire surface of the housing of the illumination device. At both ends this printed circuit board comprises at least one light emitter. It is thus observed that the illumination is via the two ends of the printed circuit board, introducing light to a light guide symmetrical on both sides. This is thus an illumination concept wherein all the components are symmetrical relative to an axis of symmetry, allowing said components to be mounted without distinction on the right or left side of the vehicle. Nevertheless, this is a very costly concept owing to the use of a printed circuit board of large dimensions and of flexible type.

It is thus seen that there is still a need for an illumination device for a vehicle that makes it possible to enhance synergies between the corresponding components on both sides of the vehicle, specifically between the door sills of the right and left doors, such that the number of different components is reduced.

### DESCRIPTION OF THE INVENTION

The present invention consists in an illumination device for a vehicle with a symmetrical arrangement for both sides of the vehicle. This means, therefore, that the illumination device can be used without distinction on the left side and on the right side of the vehicle. This is thus a module or assembly that is symmetrical in terms of its appearance, some of the internal components and/or the arrangement thereof not being symmetrical.

The essential features of the present invention are those of a connector that supplies the illumination device arranged at a central point, wiring that connects a printed circuit board and the connector, and an emission of light via a single side of the light guide, where the wiring surrounds the light guide,. The arrangement of said elements is conditioned by the use of a light guide in the door sill zone, wherein the illumination is achieved from one end of the light guide, and therefore the supply has to reach only this end. The object is to simplify the concept used for the generation of the light without compromising the versatility of assembly of the illumination device.

There being not only an asymmetrical concept of light generation but also an asymmetrical point of supply of the light guide, symmetry is sought for the arrangement and form of the wiring. Thus, the supply to the door sill arrives via a connector arranged in the central zone, there being, in addition, a conduit, in the manner of a housing for the wiring, that surrounds the light guide from the central point up to an end lateral to the light guide.

Thus, and more specifically, the invention consists in an illumination device for a vehicle, wherein the illumination device comprises:
- a casing,
- a cover, wherein the casing and the cover define an interior volume,
- at least one light emitter,
- at least one light transmission means, wherein the at least one light transmission means guides the light emitted by the at least one light emitter,
- a printed circuit board, wherein the at least one light emitter is arranged on the printed circuit board, and
- at least one electrical conductor,
wherein the at least one light emitter, the at least one light transmission means and the at least one printed circuit board are arranged in the interior volume,
wherein
the electrical conductor accesses the interior volume via the central zone of the casing, such that the electrical conductor supplies electrical energy to the printed circuit board, wherein the printed circuit board is arranged at a single end of the at least one light transmission means.

The illumination device thus comprises a symmetrical structure such that it may be mounted either on the right side of the vehicle or on the left side of the vehicle. The invention therefore offers the advantage of obtaining a unit can be used without distinction on the right and left door and/or door sill: starting from an asymmetric concept of light generation. As is observed, a symmetrical unit in terms of packing and mounting is achieved by means of the provision of the at least one electrical conductor and its connections.

Thus, and in the absence of the mounting structure of the present illumination device, it would be necessary to create an additional reference, thereby complicating the logistics of the unit, since there would have to be a difference between the module mounted in the right zone of the vehicle and the module mounted on the left of the vehicle not only in terms of manufacture but also in terms of mounting. There would consequently be different components that, owing to their mounting position within the module or owing to their intrinsic geometry, would render common use of the component incompatible.

As an effect derived from the invention, and through the insertion of the wiring via the centre of the unit and its path within the illumination device, the number of components that are different for the right illuminated sill strip and the left eliminated sill strip is minimised. The effect sought is that it should be precisely the same unit or module that is mounted on each door of the vehicle, and therefore two different references, different moulds, etc. are not required, which, logistically, would have a negative impact, involving an increase in costs. The aforesaid suggests that the present invention affords a saving in terms of development, manufacture and logistics.

Some alternatives known in the prior art likewise achieve a symmetrical illumination device, requiring, to that end, that each component that forms the illumination device is in turn symmetrical. In this way, and by way of example, the generation of light is based on a symmetry. To that end, light is emitted by means of the at least one light emitter on both sides of a light guide. As regards the supply and control of the at least one light emitter, use is made of a symmetrical printed circuit board, the latter occupying essentially the entire surface of the casing. The result is a great deal of inefficiency. Illumination devices of this type do not require complex control, and therefore a printed circuit board of small dimensions and low complexity is sufficient. It is observed, therefore, that in order to achieve symmetry the documents known from the prior art use oversized printed circuit boards, with the resulting concomitant inefficiency. It is recalled that the printed circuit board is the most expensive element of those used in an illumination device of this type.

It should thus be pointed out that the advantage represented by having a printed circuit board at the end of reduced dimensions, containing the at least one light emitters, preferably at least one LED. In this way, a substantial saving is achieved as compared with solutions known in the prior art, in which the printed circuit board is a costly and complex component, occupying, furthermore, the entire surface of the casing of the sill strip.

It is understood that the central zone of the casing is arranged in the axis of symmetry of the illumination device. Thus, illumination devices with at least one light transmitter are substantially elongate. Therefore, the central zone or axis of symmetry will be arranged at the mid-point of the elongate illumination device.

Furthermore, the electrical conductor is arranged partially around the at least one light transmission means, such that both - the at least one electrical conductor and the at least one light transmission means - lie within the interior volume of the structure or illumination device. At the same time, and complementarily, having the cables outside the illumination structure, which would comprise the light guide and the printed circuit board, allows simplification in terms of the electronics of the actual printed circuit board.

Advantageously, the at least one light emitter is arranged at a single end of the light transmission means. Thus, even though there is only at least one light emitter at a single end of the casing, acceptable illumination will be obtained for surfaces of reduced size. For illuminated surfaces of this type, illumination by means of a light guide and light emitters at a single end makes it possible to obtain optimum uniformity and intensity of light without compromise to the cost and complexity of the unit. It is therefore noted that the components involved in emission and processing of light form an asymmetric unit.

According to another aspect of the invention, the at least one light transmission means is a substantially flat light guide, such that it can be housed in a narrow space, such as in the lower zone or lower frame of the door, also known as a sill strip or threshold plate, of a vehicle. Said light transmission means is preferably of elongate form and comprises at least one light transmission surface and at least one end where the light emitted by the at least one light emitter is incident. The at least one light transmission surface is substantially parallel to the cover and casing.

Complementarily, the casing comprises a substantially flat structure and the cover comprises a substantially flat structure, both, in addition, being of elongate form such that the illumination device suits the form and volume of a lateral component of the vehicle, such as the threshold plate of the door.

In a preferred embodiment of the invention, the casing comprises a first housing, wherein the first housing retains the at least one light emitter, the at least one light transmission means and the printed circuit board, such that the unit is immobilised, thereby facilitating assembly.

Advantageously, the casing comprises a second housing, wherein the second housing retains the electrical conductor substantially via the periphery of the first housing, such that the second housing partially surrounds the first housing as far as the central zone of the casing. Therefore, the second housing extends from a first point arranged in the central zone or axis of symmetry of the illumination device as far as the second point arranged adjacent to the printed circuit board. In this way, the first point allows access to the interior volume and the second point allows the supply of the printed circuit board.

The advantage thus arises of the illumination device having a symmetrical structure such that it may be mounted either on the right side of the vehicle or on the left side of the vehicle, as internally there is a channel for a supply cable, which allows the entry point of the connector to lie in the central zone, the latter being in the same position for both sides of the vehicle.

According to another aspect of the invention, the cover comprises at least one first zone and at least one second zone, wherein the at least one first zone is opaque and wherein the at least one second zone is partially transparent, such that it is possible to delimit the illuminated forms, successfully emitting an aesthetic effect or a word for the users of the vehicle.

More particularly, the printed circuit board is rigid, of solid type, the flexible type not being required, which has the effect of a lower price and greater robustness. There is therefore a positive pay-off in terms of the volume occupied by the printed circuit board inside the interior volume and the costs of the component. It is noted that the printed circuit board involves a very high cost relative to the other components used in an illumination device such as that of the present invention.

Furthermore, the electrical conductor is a flat cable, which offers the advantageous effect of obtaining a very narrow unit, i.e. one that is compact in terms of height, which assists in its integration into the small interior volume, as required by the zone of the threshold plate or lower zone of a door of a vehicle.

In a preferred embodiment of the invention, the electrical conductor comprises an electrical connector, wherein the electrical connector is arranged at the end of the electrical conductor, wherein the end of the electrical conductor is arranged in the exterior of the casing, this being the point of connection to the electrical power supply network of the vehicle. The opposite end of the electrical conductor is welded to the printed circuit board, although, and as an alternative, a new connector or another equivalent connection mechanism may be implemented at this other end.

Additionally, the illumination device comprises a photolith film with at least one graphic element, wherein the photolith film is arranged between the at least one light transmission means and the cover, such that the graphic element can be viewed by the user of the vehicle. It is pointed out that the graphic element may also be arranged, as an alternative, on the cover, likewise forming an opaque zone and a zone that allows light transmission.

Advantageously, the at least one light emitter is an LED so as to take advantage of the light efficiency and low consumption of said lighting devices in addition to a compact volume.

The present invention also relates to a sill strip of a vehicle that comprises an illumination device according to the above description, which component benefits from the above-mentioned advantages for the illumination device. "Sill strip" is understood to mean the lower zone of the frame of a door, also known as a threshold plate.

The present invention also relates to a door of a vehicle that in turn comprises an illumination device according to the above description, which component benefits from the above-mentioned advantages for the illumination device. It should be pointed out that during the description reference has been made to one example of use of the present invention, namely the threshold plate or bottom zone of a door of a vehicle. The illumination device of the present invention may be used in other zones, such as, for example, a panel of a door of a vehicle, and upright b or central pillar of a vehicle, etc., where there is a need to manufacture a single illumination device that can be used not only on the right side but also on the left side of the vehicle.

It should be noted that, in addition to the components or elements described in the present invention, use may also be made of other elements that promote light transmission, contribute to minimising light losses, enhance uniformity of light, etc., such as optics, lenses, reflectors, etc.

By way of non-limiting example, the attached drawings show an illumination device for a vehicle constituted in accordance with the invention. Other features and advantages of said illumination device for a vehicle, which is the subject of the present invention, will become apparent from the description of a preferred, albeit non-exclusive, embodiment illustrated by way of non-limiting example in the accompanying drawings, in which:

### BRIEF DESCRIPTION OF THE DRAWINGS

Figure 1.-This is a perspective view of the successive components of the illumination device according to the present invention.
Figure 2.-This is a plan view of the illumination device, once assembled, according to the present invention.
Figure 3.-This is a perspective view of the detail of the casing for the illumination device according to the present invention.

### DESCRIPTION OF A PREFERRED EMBODIMENT

In light of said figures, and in accordance with the numbering used, it is posible to observe therein a preferred illustrative embodiment of the invention, which comprises the parts and components indicated and described in detail below.

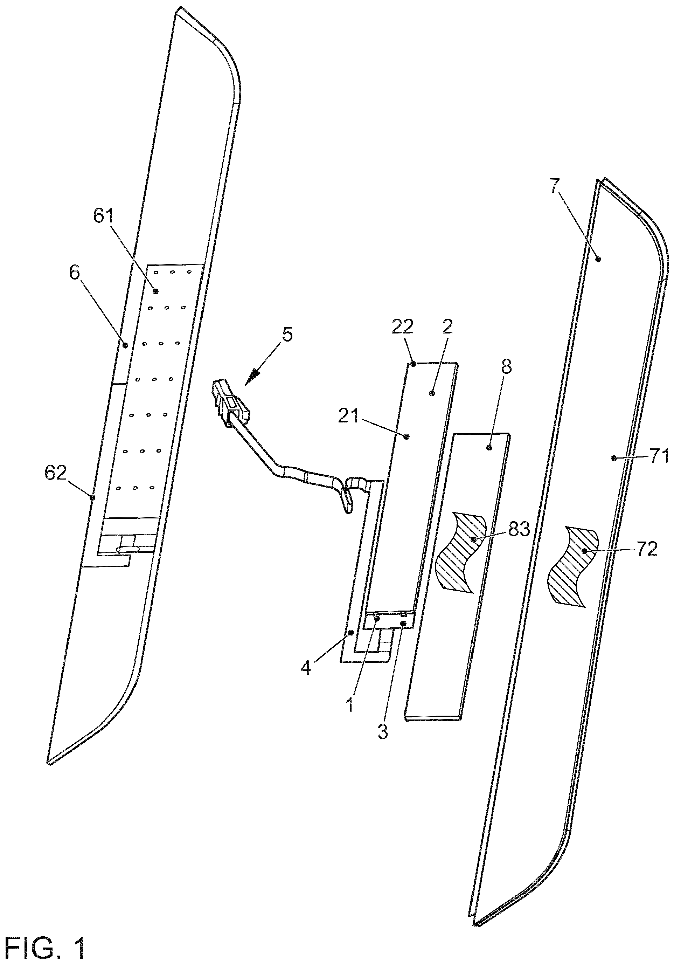

In Figure 1 it is possible to see an expanded view, in perspective, of a preferred embodiment in which the illumination device is incorporated into a sill strip of a door of a vehicle. From back to front, moving forward, in perspective, it is possible to see a casing 6 with a first housing 61 and a second housing 62, which are intended to house a printed circuit board 3, at least one light emitter 1 and at least one light transmission means 2, in the case of the first housing 61 and, on the other side, electrical wiring 4 in the case of the second housing 62. The electrical wiring 4 extends as far as an outlet in the central part of the upper margin of the casing 6 via where it is connected to an electrical connector 5. The electrical connector 5 is connected to the energy supply system of the vehicle, thus making it possible to supply power to the illumination device of the present invention. Covering the light transmission means 2 is a photolith film 8, which comprises a graphic element 83. The unit is completed with a cover 7, which, at least in a second zone 72, allows the outlet of the light from the illumination device. The principal function of an illumination system such as that shown in the present invention is to illuminate and to pick out the graphic element 83.

Other components, such as lenses, optics, reflectors, etc., may be used to enhance the uniformity of the light, to reduce light loss, etc., and therefore the configuration in terms of treatment of the light is not limited to the configuration presented, but the latter is indeed sufficient to demonstrate the concept of a symmetrical illumination device that is the subject of the present invention.

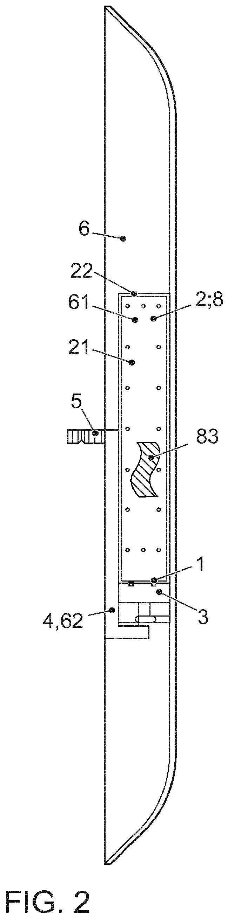

In Figure 2 it is possible to see a plan view of the expanded view, in perspective, of Figure 1, once assembled. A graphic element 83 that is different from and is an alternative to that of Figure 1 is observed. It should be pointed out that in the plan view shown the cover 7 has been removed the purpose of making it possible to view the components immediately below. In this Figure 2 the typical elongate and narrow configuration of this type of illumination devices is observed, which are based on a light guide that is likewise elongate and narrow.

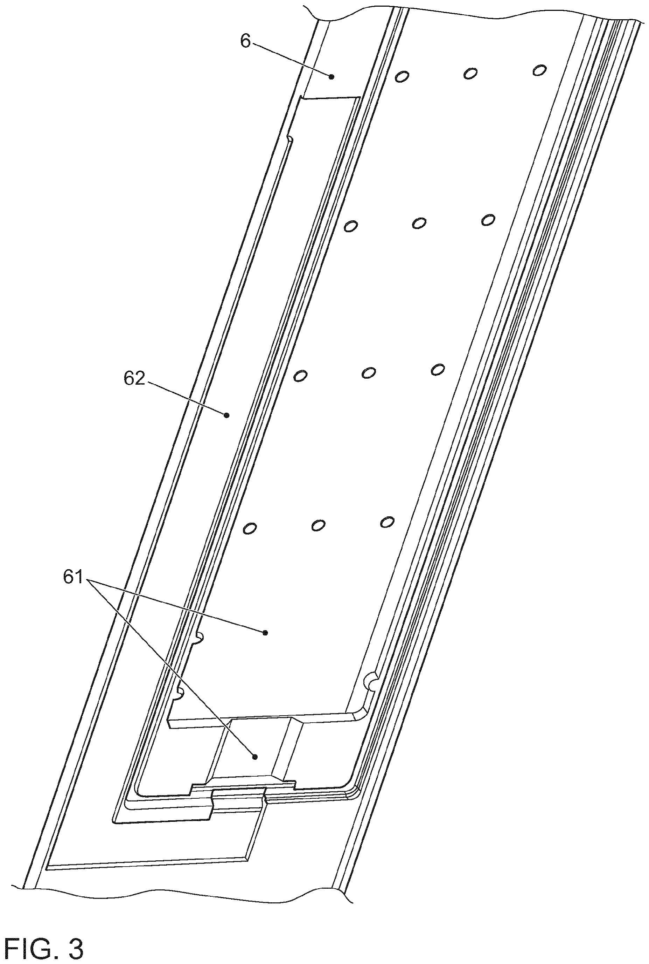

In Figure 3 is possible to see, according to a preferred embodiment, the detail of the component of the casing 6, of the first housing 61 and of the second housing 62. Assembly details are also observed, for better centring and securing of the light transmission means 2, in the form of studs or projections, in the manner of semicircles, in the frame of the first housing 61, and also a narrowing, for better orientation of the connection of the electrical conductor 4 with the printed circuit board 3.

More particularly, as is seen in Figures 1, 2 and 3, the illumination device for a vehicle comprises a casing 6, a cover 7, wherein the casing 6 and the cover 7 define an interior volume, at least one light emitter 1, at least one light transmission means 2, wherein the at least one light transmission means 2 conveys the light emitted by the at least one light emitter 1, a printed circuit board 3, wherein the at least one light emitter 1 is arranged in the printed circuit board 3, and the at least one electrical conductor 4, wherein the at least one light emitter 1, the at least one light transmission means 2 and the printed circuit board 3 are arranged in the interior volume, wherein the electrical conductor 4 accesses the interior volume via the central zone of the casing 6, such that the electrical conductor 4 supplies electrical energy to the printed circuit board 3, wherein the printed circuit board 3 is arranged at a single end of the at least one light transmission means 2.

As is seen in Figures 1 and 2, the electrical conductor 4 in the form of a flat cable lies between a first end arranged at the mid-point or central zone of the casing 6 as far as a second end arranged in the zone adjacent to the printed circuit board 3, thereby making it possible for the component to be installed in both right and left doors and in the respective sill strips thereof without the need for specific additional components. Said mid-point or central zone of the casing 6 may be either on the upper edge thereof or, alternatively, on the lower edge thereof, but always arranged in the axis of symmetry.

It is observed that the casing 6 and the cover 7 have a substantially symmetrical geometry, such that they may be used without distinction in one orientation or the other. Thus, the exterior appearance of the illumination device is that of a symmetrical unit or module. So, once the cover 7 has been removed, it is observed that, internally, the assemblies are responsible for generating the light are arranged asymmetrically. It is an object of the present invention, on the basis of a set of elements arranged asymmetrically, to obtain a module that may be installed without distinction either on the left side or on the right side of the vehicle.

More specifically, as is seen in Figures 1 and 2, the at least one light emitter 1, is arranged at a single end of the light transmission means 2. A light emitter module that is as simple as possible is sought, which complies with the photometric requirements and specifications of an illumination device such as that of the present invention. It is observed that the graphic element 83 to be illuminated has reduced dimensions, and therefore does not demand a high illumination requirement.

According to another aspect of the invention, as seen in Figures 1 and 2, the at least one light transmission means 2 is a substantially flat and preferably elongate light guide, wherein the at least one light transmission means 2 comprises at least one light transmission surface 21 and at least one end 22 where the light emitted by the at least one light emitter 1 is incident, such that the at least one light transmission surface 21 is substantially parallel to the cover 7 and casing 6. The light generated by the at least one light emitter 1 enters only via an end 22 of the light transmission means 2. For the purpose of uniformly illuminating the graphic element 83 there are different alternative options, such as striations, grooves, etc., arranged in the light transmission element 2, such that the light is directed essentially towards the graphic element 83. It is thus noted that the principal asymmetry of the concept arises from the arrangement of the at least one light emitter 1 at a single end 22 of the light transmission means 2.

It should further be pointed out that the light transmission means 2 does not overlap the printed circuit board 3, with the result that there is an illumination device with reduced height and volume.

In addition, as seen in Figures 1 and 2, the casing 6 comprises a substantially flat structure and the cover 7 comprises a substantially flat and preferably elongate structure, defining the axis of symmetry in the mid-zone thereof, via which the electrical conductor 4 will enter the interior volume defined between the casing 6 and the cover 7.

Furthermore, as is seen in Figures 1 and 2, the casing 6 comprises a first housing 61, wherein the first housing 61 retains the at least one light emitter 1, the at least one light transmission means 2 and the printed circuit board 3. The retention mechanisms may vary, such as, for example, small projections or clips created in the same injection mould for the casing 6.

According to a preferred embodiment of the invention, as seen in Figures 1, 2 and 3, the casing 6 comprises a second housing 62, wherein the second housing 62 retains the electrical conductor 4 substantially by the periphery of the first housing 61, such that the second housing 62 partially surrounds the first housing 61 as far as the central zone of the casing 6. The second housing 62 runs from the point of the first housing 61, intended for the printed circuit board 3, as far as the point of entry to the casing 6 of the electrical conductor 4. Said second housing 62 allows the housing of the electrical conductor 4, preferably a flat cable, guiding it from the centre of the unit as far as the end where the printed circuit board 3 and the light emitter 2, preferably of LED type, are located.

More specifically, as seen in Figures 1 and 2, the cover 7 comprises at least one first zone 71 and at least one second zone 72, wherein the at least one first zone 71 is opaque and wherein the at least one second zone 72 is partially transparent, the at least one second zone 72 being substantially superposed on the graphic element 83 to be illuminated.

According to another preferred embodiment of the invention, as seen in Figures 1 and 2, the printed circuit board 3 is rigid, or solid, in place of the flexible printed circuit board 3, or PCB, customarily used in the prior art. This solution makes it possible to achieve a unit that is more compact and more simple and at the same time less expensive.

According to another aspect of the invention, as seen in Figures 1 and 2, the electrical conductor 4 is a flat cable, which may be suitably folded with a view to creating the angles shown in the second housing 62 and making it possible to surround the first housing 61 at least partially.

According to another preferred embodiment of the invention, as seen in Figures 1 and 2, the electrical conductor 4 comprises an electrical connector 5, wherein the electrical connector 5 is arranged at the end of the electrical conductor 4, wherein the end of the electrical conductor 4 is arranged in the exterior of the casing 6.

The electrical conductor 4 may be welded to the printed circuit board 3 or, alternatively, a second connector may be implemented at this other end joining the electrical connector 4 to the printed circuit board 3.

According to another aspect of the invention, as seen in Figures 1 and 2, the illumination device comprises a photolith film 8 with at least one graphic element 83, wherein the photolith film 8 is arranged between the at least one light transmission means 2 and the cover 7. Furthermore, as an alternative, the graphic element 83 may be formed directly on the cover 7. It should be mentioned that, inside the first housing 61, there may be a reflector parallel to the light transmission means 2 and arranged between the casing 6 and the light transmission means 2, such that it enhances the efficiency of the unit in order to prevent light losses. There may also, likewise, be the other components and optics for treatment of the light that are different from those described.

According to another preferred embodiment of the invention, as seen in Figures 1 and 2, the at least one light emitter 1 is an LED.

A further subject of the present invention, as seen in Figures 1 and 2, is a sill strip of a vehicle that comprises an illumination device as described above.

In addition, a further subject of the present invention, as seen in Figures 1 and 2, is a door of a vehicle that comprises an illumination device as described above, by way of example and illuminated decoration implemented in the interior panel of the door of the vehicle.

The details, the forms, the dimensions and other accessory elements, and also the components used in the implementation of the illumination device for a vehicle, may be suitably replaced by others that are technically equivalent, and which do not depart from the essential nature of the invention or the scope defined by the claims, which are included in the following list.

### Numerical reference list:

- 1: light emitter
- 2: light transmission means
- 21: light transmission surface
- 22: end
- 3: printed circuit board
- 4: electrical conductor
- 5: electrical connector
- 6: casing
- 61: first housing
- 62: second housing
- 7: cover
- 71: first zone
- 72: second zone
- 8: photolith film
- 83: graphic element

## Claims

1. Illumination device for a vehicle, wherein the illumination device comprises:
- a casing (6),
- a cover (7), wherein the casing (6) and the cover (7) define an interior volume,
- at least one light emitter (1),
- at least one light transmission means (2), wherein the at least one light transmission means (2) guides the light emitted by the at least one light emitter (1),
- a printed circuit board (3), wherein the at least one light emitter (1) is arranged on the printed circuit board (3), and
- at least one electrical conductor (4),
wherein the at least one light emitter (1), the at least one light transmission means (2) and the at least one printed circuit board (3) are arranged in the interior volume,
**characterized in that**
the electrical conductor (4) accesses the interior volume via the central zone of the casing (6), such that the electrical conductor (4) supplies electrical energy to the printed circuit board (3), wherein the printed circuit board (3) is arranged at a single end of the at least one light transmission means (2).

2. Illumination device for a vehicle according to Claim 1, **characterized in that** the electrical conductor (4) is arranged partially around the at least one light transmission means.

3. Illumination device for a vehicle according to Claim 1, **characterized in that** the at least one light emitter (1) is arranged at a single end of the light transmission means (2).

4. Illumination device for a vehicle according to Claim 1, **characterized in that** the at least one light transmission means (2) is a substantially flat light guide.

5. Illumination device for a vehicle according to Claim 1, **characterized in that** the casing (6) comprises a substantially flat structure and the cover (7) comprises a substantially flat structure.

6. Illumination device for a vehicle according to Claim 1, **characterized in that** the casing (6) comprises a first housing (61), wherein the first housing (61) retains the at least one light emitter (1), the at least one light transmission means (2) and the printed circuit board (3).

7. Illumination device for a vehicle according to Claim 6, **characterized in that** the casing (6) comprises a second housing (62), wherein the second housing (62) retains the electrical conductor (4) substantially via the periphery of the first housing (61), such that the second housing (62) partially surrounds the first housing (61) as far as the central zone of the casing (6).

8. Illumination device for a vehicle according to Claim 1, **characterized in that** the cover (7) comprises at least one first zone (71) and at least one second zone (72), wherein the at least one first zone (71) is opaque and wherein the at least one second zone (72) is partially transparent.

9. Illumination device for a vehicle according to Claim 1, **characterized in that** the printed circuit board (3) is rigid.

10. Illumination device for a vehicle according to Claim 1, **characterized in that** the electrical conductor (4) is a flat cable.

11. Illumination device for a vehicle according to Claim 1, **characterized in that** the electrical conductor (4) comprises an electrical connector (5), wherein the electrical connector (5) is arranged at the end of the electrical conductor (4), wherein the end of the electrical conductor (4) is arranged in the exterior of the casing (6).

12. Illumination device for a vehicle according to Claim 1, **characterized in that** it comprises a photolith film (8) with at least one graphic element (83), wherein the photolith film (8) is arranged between the at least one light transmission means (2) and the cover (7).

13. Illumination device for a vehicle according to Claim 1, **characterized in that** the at least one light emitter (1) is an LED.

14. Sill strip of a vehicle that comprises an illumination device according to any of the preceding claims.

15. Door of a vehicle that comprises an illumination device according to any of the preceding claims.
